# EUROPEAN PATENT APPLICATION

(11) **EP 1 630 066 A2**
(43) Date of publication of application: **01.03.2006**
(21) Application number: 05076962.9
(22) Date of filing: 25.08.2005
(51) Int. Cl.: B62D 1/184

(54) **Dual axis rolling element for adjustable steering column**

(30) Priority: 30.08.2004 US 605490
(71) Applicant: Delphi Technologies, Inc., Troy, MI 48007 (US)
(72) Inventor: Gaeth, Gerald A., Frankenmuth, MI 48734 (US); Tinnin, Melvin L., Clio, MI 48420 (US); Rouleau, James E., Burt, MI 48417 (US)
(74) Representative: Denton, Michael John

(57) **Abstract**

The invention provides a steering column assembly for a vehicle. The steering column assembly includes a bracket (12) mountable to a vehicle. The bracket (12) includes a pair of sides defining a channel. The steering column assembly also includes a jacket (24) moveably positioned in the channel. The steering column assembly also includes a bolt assembly having a bolt (66) passing through both of the bracket (12) and the jacket (24). The bolt assembly is operable to urge the sides of the channel together against the jacket (24). The steering column assembly also includes a first rolling element (40) pierced by the bolt assembly. The first rolling element (40) is operably disposed between the jacket (24) and the bracket (12) to enhance relative movement between the jacket (24) and the bracket (12).

## Description

### TECHNICAL FIELD

The invention relates to steering column positionable in a vehicle and adjustable between at least two positions.

### BACKGROUND OF THE INVENTION

Vehicles often include adjustable steering columns. Adjustable steering columns are moveable along a path of adjustment between first and second positions. The path of adjustment can define a tilting path, a raking path, a telescoping path, or any combination of movements, especially tilting and telescoping or raking and telescoping. During movement along the path of adjustment the steering column, or at least a portion thereof, slides relative to some other mounting structure that is fixed relative to the vehicle.

### SUMMARY OF THE INVENTION

The invention provides a steering column assembly for a vehicle. The steering column assembly includes a bracket mountable to a vehicle. The bracket includes a pair of sides defining a channel. The steering column assembly also includes a jacket moveably positioned in the channel. The steering column assembly also includes a bolt assembly having a bolt passing through both of the bracket and the jacket. The bolt assembly is operable to urge the sides of the channel together against the jacket. The steering column assembly also includes a first rolling element pierced by the bolt assembly. The first rolling element is operably disposed between the jacket and the bracket to enhance relative movement between the jacket and the bracket.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a first perspective view of a first exemplary embodiment of the invention showing the bottom of a moveable portion of a steering column and a mounting structure attachable to a vehicle;
Figure 2 is a second perspective view of the first exemplary embodiment of the invention showing the moveable portion of the steering column;
Figure 3 is a third perspective view of the first exemplary embodiment of the invention showing the moveable portion of the steering column, a first ball track, and a ball carrier;
Figure 4 is a fourth perspective view of the first exemplary embodiment of the invention similar to Figure 3 and showing a second ball track covering the ball carrier;
Figure 5 is a cross-sectional view taken along section lines 5-5 in Figure 4;
Figure 6 is a fifth perspective view of the first exemplary embodiment of the invention showing the mounting structure attachable to the vehicle, a plurality of first ball tracks, a ball carrier, and a second ball track;
Figure 7 is a sixth perspective view of the first exemplary embodiment of the invention similar to Figure 6 and showing a second ball track, a first ball track, and a ball carrier covering the ball carrier shown in Figure 6;
Figure 8 is a seventh perspective view of the first exemplary embodiment of the invention showing the top of the moveable portion of the steering column and the mounting structure attachable to the vehicle;
Figure 9 is a eighth perspective view of the first exemplary embodiment of the invention showing the top of the moveable portion of the steering column and the mounting structure attachable to the vehicle; and
Figure 10 is a cross-sectional view of a second exemplary embodiment of the invention showing the bottom of a moveable portion of a steering column and a mounting structure attachable to a vehicle.

### DETAILED DESCRIPTION OF THE PREFERRED EMBODIMENT

A plurality of different embodiments of the invention are shown in the Figures of the application. Similar features are shown in the various embodiments of the invention. Similar features have been numbered with a common two-digit reference numeral and have been differentiated by a third digit placed before the two common digits. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

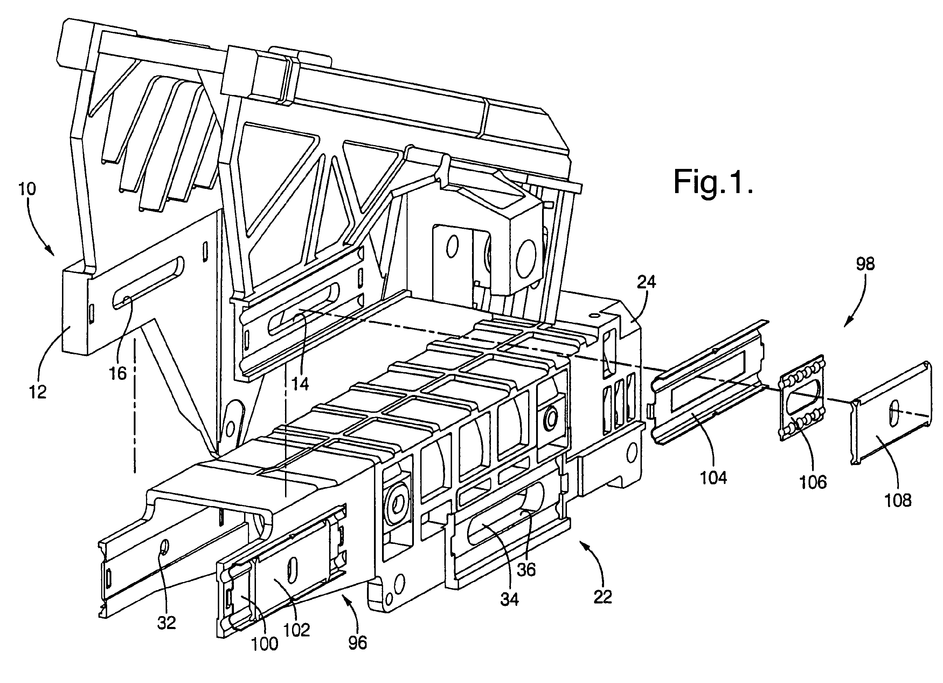

Referring now to Figure 1, in a first exemplary embodiment of the invention, a steering column assembly includes a mounting structure 10 fixedly mountable in a vehicle. The mounting structure 10 of the first exemplary embodiment of the invention includes a bracket 12. The bracket 12 is u-shaped, or channel-like. The bracket 12 defines a longitudinal slot 14 extending along a substantially longitudinal path. As will be set forth in greater detail below, the longitudinal slot 14 supports/guides a moveable portion of a steering column during movement along a path of telescopic adjustment. The bracket 12 also defines a second longitudinal slot 16 extending along a substantially longitudinal path for supporting/guiding the moveable portion of the steering column during movement along a path of telescopic adjustment. The longitudinal slots 14, 16 are disposed generally at the bottom of the bracket 12. As used herein, the bottom of the bracket 12 is the end of the bracket 12 that is generally farthest from the driver.

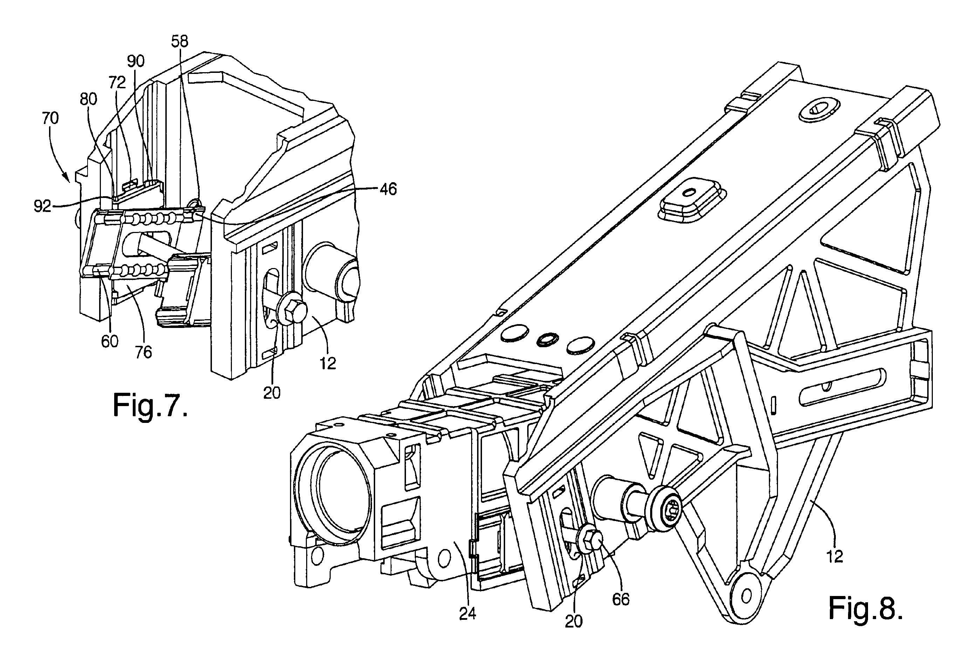

The bracket 12 also defines an arcuate slot 18, best shown in Figure 6, extending along a substantially arcuate path. As will be set forth in greater detail below, the arcuate slot 18 supports/guides a moveable portion of a steering column during movement along a path of raking adjustment. The bracket 12 also defines a second arcuate slot 20 extending along a substantially arcuate path for supporting/guiding the moveable portion of the steering column during movement along a path of raking adjustment. The arcuate slots 18, 20 are disposed generally at the top of the bracket 12. As used herein, the top of the bracket 12 is the end of the bracket 12 that is generally closest to the driver.

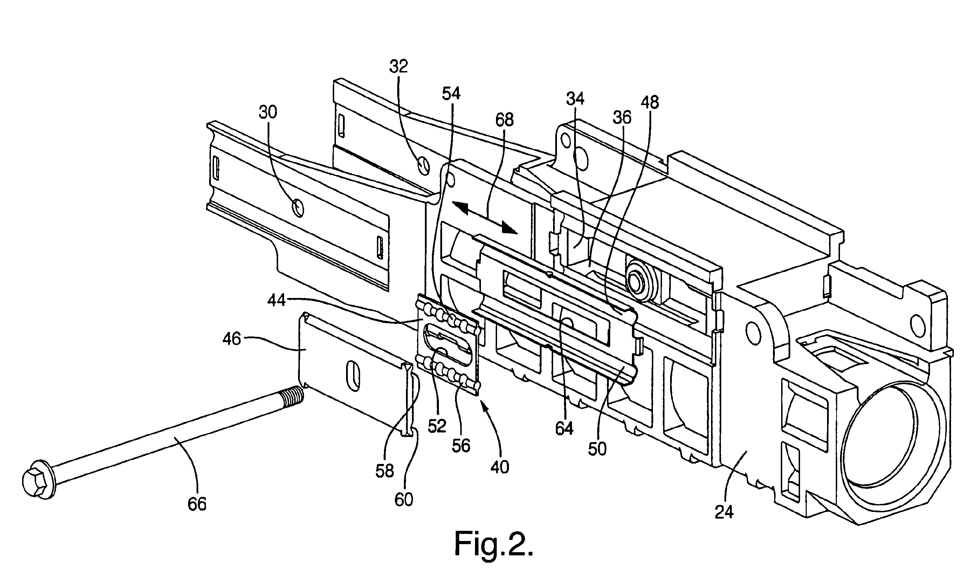

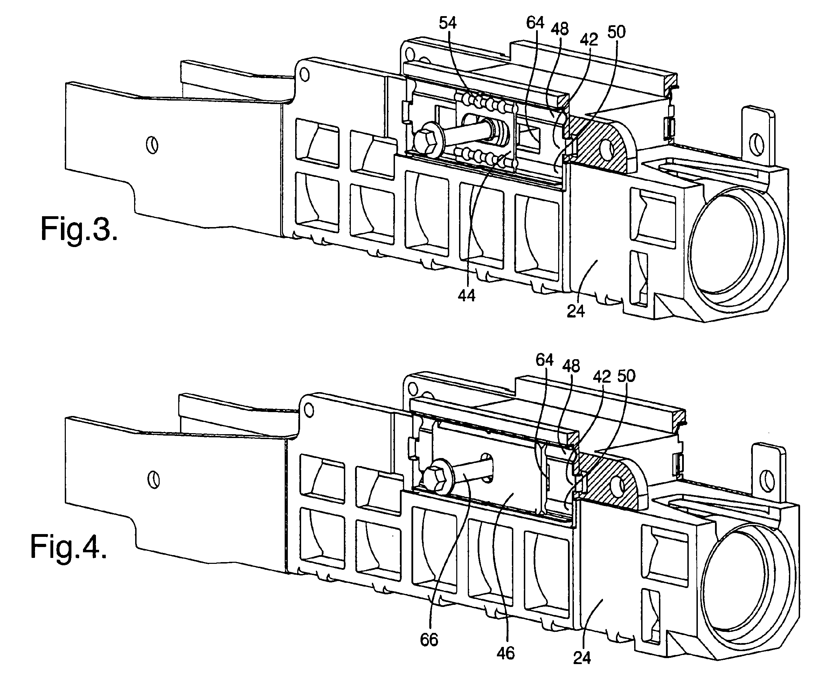

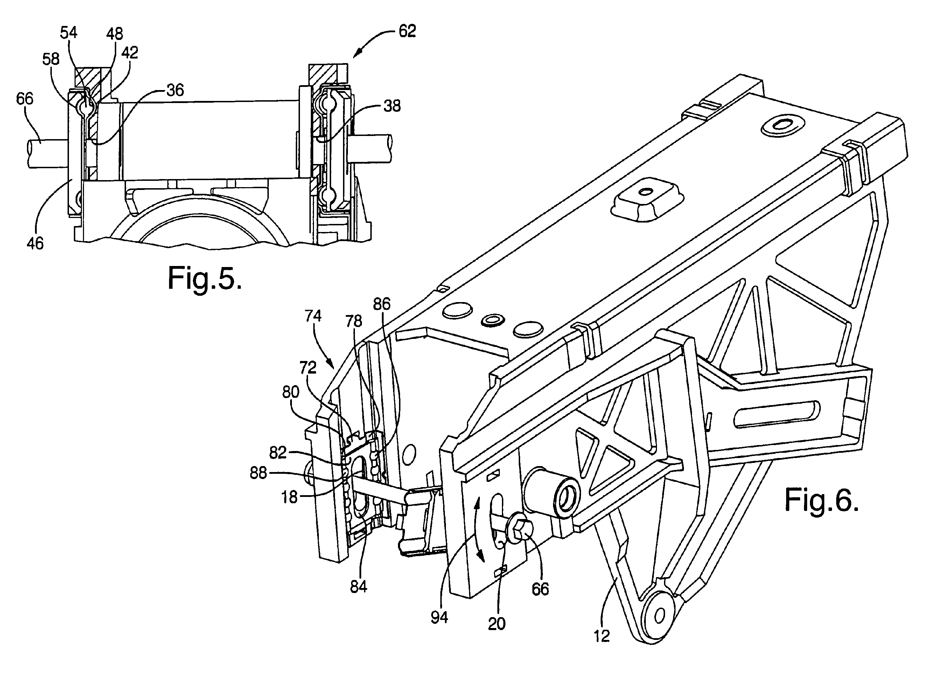

Referring now to Figures 1 and 2, a moveable portion 22 of a steering column is guided/supported for movement by the mounting structure 10. The moveable portion 22 of the first exemplary embodiment of the invention includes a jacket 24. The jacket 24 is received in the channel defined by the bracket 12. It is noted that some minor structural details of the jacket 24 shown in the various figures are inconsistent with one another. For example, the side of the jacket 24 shown in Figures 1 and 2 is different than the side of the jacket 24 shown in Figures 3-9. These differences demonstrate that the invention can be practiced in several different embodiments. To enhance the clarity of description, the jacket 24 has been commonly numbered in all Figures showing the first embodiment of the invention.

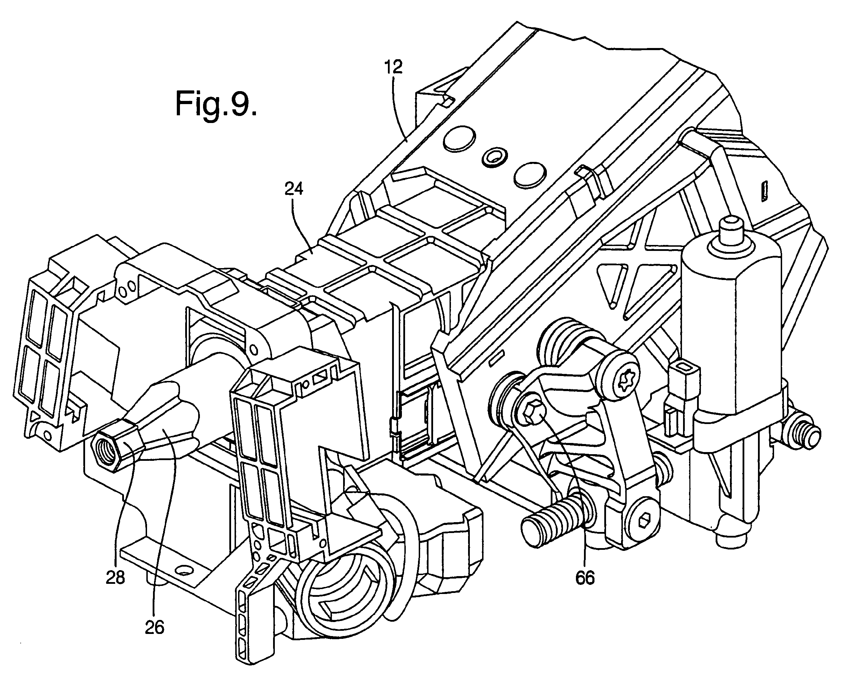

The jacket 24 is moveable along a path of telescopic movement between a plurality of positions. As will be described in greater below, the path of movement in the first exemplary embodiment of the invention is defined by the longitudinal slots 14, 16 for telescoping movement and the arcuate slots 18, 20 for raking movement. Generally, the jacket 24 supports a steering shaft 26, best shown in Figure 9. The steering shaft 26 defines a mounting end 28, a steering wheel being mounted on the mounting end 28. The movement of jacket 24 along the paths of movement allows the steering shaft 26 to be moved to position the steering wheel as desired by the driver of the vehicle. The paths of movement can define tilting movement, raking movement, telescoping movement, or any combination of tilting and telescoping movements or raking and telescoping movements.

The jacket 24 is moveable between at least two positions along the path of telescoping movement. The jacket 24 can be moveable between more than two positions along the path of telescoping movement. The jacket 24 can be infinitely adjustable as that term is used in the art.

Referring to Figures 1, 2 and 5, the jacket 24 defines first and second apertures 30, 32 generally adjacent to the bottom of the jacket 24. As will be set forth in greater detail below, the first and second apertures 30, 32 support/guide the jacket 24 during movement along a path of telescoping adjustment. The jacket 24 also defines a slot 34 extending between first and second openings 36, 38. As will be set forth in greater detail below, the slot 34 supports/guides the jacket 24 during movement along a path of raking and telescoping adjustment. In alternative embodiments of the invention, the slot 34 could be formed as two distinct, spaced slots.

Referring now to Figures 1 - 5, a rolling element 40 is disposed between the bracket 12 and the jacket 24 to enhance relative movement between the bracket 12 and the jacket 24. The rolling element 40 includes a first ball track member 42, a ball carrier 44, and a second ball track member 46. The first ball track member 42 of the first exemplary embodiment of the invention is a stamped member fixedly associated with the jacket 24. In alternative embodiments of the invention, the first ball track member 42 could be integrally formed with either the jacket 24 or the bracket 12. The first ball track member 42 defines first and second ball tracks 48, 50. The first ball track member 42 also defines a slot 64 to accommodate telescoping movement of the jacket 24. The ball carrier 44 includes a frame 52 and a plurality of rollers, such as rollers 54, 56. The rollers 54, 56 are movably support by the frame 52 for rotational movement. The roller 54 contacts and moves in the first ball track 48. The roller 56 contacts and moves in the second ball track 50. The second ball track member 46 of the first exemplary embodiment of the invention is a powdered-metal member fixedly associated with the frame 52. The second ball track member 46 defines third and fourth ball tracks 58, 60. The third ball track 58 opposes the first ball track 48 and the roller 54 contacts and moves in the third ball track 58. The fourth ball track 60 opposes the second ball track 50 and the roller 56 contacts and moves in the fourth ball track 60. A second rolling element 62 is constructed similarly with respect to the rolling member 40 and is disposed between the bracket 12 and the jacket 24, on an opposite side of the jacket 24 relative to the rolling element 42, to enhance relative movement between the bracket 12 and the jacket 24.

The rollers of the exemplary embodiment of the invention provide at least two benefits over known sliding arrangements. First, the rollers increase the likelihood of relatively constant friction between the moveable portion of the steering column and the mounting structure. Generally, a sliding arrangement will require a higher initial force to overcome static friction and begin movement of the moveable portion of the steering column, with respect to the force required to overcome dynamic friction during movement. Second, the rollers allow the moveable portion of the steering column and the mounting structure to be clamped together with greater force than a sliding arrangement. As a result, the connection between the moveable portion of the steering column and the mounting structure enjoys increased stiffness.

A bolt assembly includes a bolt 66 extending through the arcuate slots 18, 20, the second ball track member 46, the ball carrier 44, the slot 64, the slot 34, and the second rolling element 60. The bolt assembly of the exemplary embodiment of the invention also includes a nut engageable with the bolt 66 to urge the sides of the channel of the bracket 12 together. During telescoping movement of the jacket 24 relative to the bracket 24, the first ball track member 42 moves along a telescoping path 68 relative to the bolt 66, the second ball track member 46, and the ball carrier 44. The rollers of the ball carrier 44, such as rollers 54 and 56, enhance movement by reducing the force required to move the jacket 24 relative to the bracket 12 compared to a bushing. Also, the amount of force required to move the jacket 24 is substantially constant over the path 68. The length of the path 68 corresponds to the length of the slot 64.

Referring now to Figures 6 and 7, a third rolling element 70 is disposed between the bracket 12 and the jacket 24 to enhance relative movement between the bracket 12 and the jacket 24. The third rolling element 70 includes a first ball track member 72, a ball carrier 74, and a second ball track member 76. The first ball track member 72 of the first exemplary embodiment of the invention is a stamped member fixedly associated with the jacket 24. The first ball track member 72 defines first and second ball tracks 78, 80. The first ball track member 72 also defines a slot 84 to accommodate raking movement of the jacket 24. The ball carrier 74 includes a frame 82 and a plurality of rollers, such as rollers 86, 88. The rollers 86, 88 are movably support by the frame 82 for rotational movement. The roller 86 contacts and moves in the first ball track 78. The roller 88 contacts and moves in the second ball track 80. The second ball track member 76 of the first exemplary embodiment of the invention is a powdered-metal member fixedly associated with the frame 82. The second ball track member 76 defines third and fourth ball tracks 90, 92. The third ball track 90 opposes the first ball track 78 and the roller 86 contacts and moves in the third ball track 90. The fourth ball track 92 opposes the second ball track 80 and the roller 88 contacts and moves in the fourth ball track 80. A fourth rolling element (not visible) is constructed similarly with respect to the rolling member 70 and is disposed between the bracket 12 and the jacket 24 to enhance relative movement between the bracket 12 and the jacket 24.

The bolt 66 extends through the arcuate slots 18, 20, the slot 84, the frame 82, the second ball track member 76, the slot 34, and the fourth rolling element. The second ball track members 46, 76 are disposed back-to-back with respect to one another in the first exemplary embodiment of the invention. During raking movement of the jacket 24 relative to the bracket 12, the second ball track member 76 and ball carrier 74 move along a raking path 94 relative to the bracket 12 and the first ball track member 72. The rollers of the ball carrier 74, such as rollers 86 and 88, enhance movement by reducing the force required to move the jacket 24 relative to the bracket 12 compared to a bushing. Also, the amount of force required to move the jacket 24 is substantially constant over the path 94. The length of the path 94 corresponds to the length of the slots 18, 20.

The rolling elements 40, 62 and 70 are disposed at the top of the jacket 24. Referring now to Figure 1, a pair of rolling elements 96, 98 are disposed at the bottom of the jacket 24 to enhance telescoping movement between the bracket 12 and the jacket 24. The rolling element 96 includes a first ball track member 100, a ball carrier (not visible), and a second ball track member 102. The rolling element 98 includes a first ball track member 104, a ball carrier 106, and a second ball track member 108. A bolt (not shown extends through apertures 30, 32, the second ball track members 102, 108, the ball carriers of the rolling elements 96, 98 including ball carrier 106, the first ball track members 100, 104, and the slots 14, 16. In alternative embodiments of the invention, additional rolling elements could be disposed at the bottom of the jacket 24 to enhance raking movement. Rotation or raking at the bottom of the jacket 24 is greater than at the top of the jacket 24 and rolling elements for telescoping movement may suffice, however, additional rolling elements may be desirable. Alternatively, the ball tracks of the rolling elements may be modified accommodate slight rotation of the jacket 24 relative to the bracket 12.

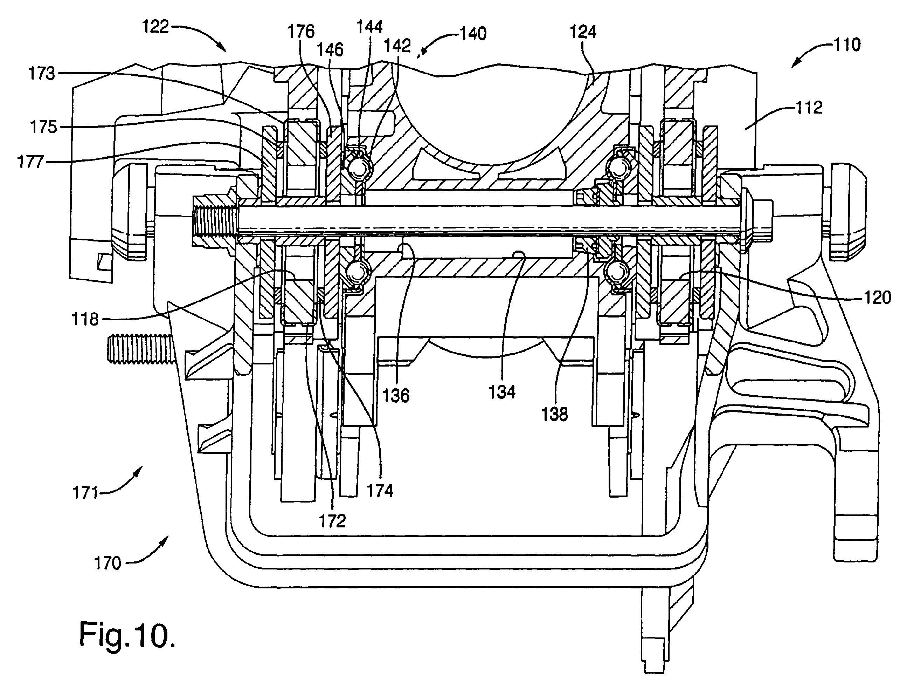

Referring now to Figure 10, in a second exemplary embodiment of the invention, a mounting structure 110 is fixedly mountable in a vehicle. The mounting structure 110 includes a bracket 112. The bracket 112 defines first and second arcuate slots 118, 120 extending along a substantially arcuate path and for supporting/guiding the moveable portion of the steering column during movement along a path of raking adjustment. A moveable portion 22 of a steering column is guided/supported for movement by the mounting structure 110. The moveable portion 122 of the first exemplary embodiment of the invention includes a jacket 124. The jacket 124 is received in the channel defined by the bracket 112. The jacket 124 defines a slot 134 extending between first and second openings 136, 138 for supporting/guiding the jacket 124 during movement along a path of raking and telescoping adjustment.

A rolling element 140 is disposed between the bracket 112 and the jacket 124 to enhance relative movement between the bracket 112 and the jacket 124. The rolling element 140 includes a first ball track member 142, a ball carrier 144, and a second ball track member 146. First and second rolling elements 170, 171 are disposed on opposite sides of the bracket 112 to enhance raking movement. The rolling element 170 includes a first ball track member 172, a ball carrier 174, and a second ball track member 176. The rolling element 171 includes a first ball track member 173, a ball carrier 175, and a second ball track member 177.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A steering column assembly for a vehicle comprising:
a bracket (12) mountable to a vehicle and having a pair of sides defining a channel;
a jacket (24) moveably positioned in said channel;
a bolt assembly having a bolt (66) passing through both of said bracket (12) and said jacket (24) and operable to urge the sides of the channel together against said jacket (24); and
a first rolling element (40) pierced by said bolt assembly and operably disposed between said jacket (24) and said bracket (12) to enhance relative movement between said jacket (24) and said bracket (12).

2. The steering column assembly of claim 1 wherein said first rolling element (40) further comprises:
a first ball track member (42) fixedly engaged with one of said bracket (12) and said jacket (24) and defining at least one ball track (48, 50);
a ball carrier (44) having a frame (52) and a plurality of rollers (54, 56) movably supported by the frame (52) for rotational movement, wherein at least one of said rollers (54, 56) is disposed in said at least one ball track (48, 50) of said first ball track member (42); and
a second ball track member (46) defining at least one ball track (58, 60), wherein at least one of said rollers (54, 56) is disposed in said at least one ball track (58, 60) of said second ball track member (46).

3. The steering column assembly of claim 1 wherein said first ball track member (42) is a stamped member fixedly associated with said jacket (24).

4. The steering column assembly of claim 1 wherein said first ball track member (42) defines first and second ball tracks (48, 50) disposed on opposite sides of said bolt assembly.

5. The steering column assembly of claim 1 wherein said first ball track member (42) defines a slot (64) receiving said bolt assembly.

6. The steering column assembly of claim 1 wherein said second ball track member (46) is a powdered-metal member substantially fixedly associated with said frame (52).

7. The steering column assembly of claim 1 wherein said second ball track member (46) defines third and fourth ball tracks (58, 60).

8. The steering column assembly of claim 1 wherein:
said first ball track member (42) defines first and second ball tracks (48, 50) disposed on opposite sides of said bolt assembly;
said second ball track member (46) defines third and fourth ball tracks (58, 60) disposed on opposite sides of said bolt assembly such that said third ball track (58) opposes said first ball track (48) and said fourth ball track (60) opposes said second ball track (50), wherein one of said plurality of rollers (54, 56) concurrently contacts said third and first ball tracks (58, 48) and another of said plurality of rollers (54, 56) concurrently contacts said fourth and second ball tracks (60, 50).

9. The steering column assembly of claim 9 wherein one of said first and second ball track members (42, 46) moves relative to the other during relative movement of between said jacket (24) and said bracket (12).

10. The steering column assembly of claim 1 further comprising:
a second rolling element (62) pierced by said bolt assembly and operably disposed between said jacket (24) and said bracket (12) on an opposite side of said jacket (24) relative to said first rolling element (40) to enhance relative movement between said jacket (24) and said bracket (12).

11. The steering column assembly of claim 1 further comprising:
a third rolling element (70) pierced by said bolt assembly and operably disposed between said jacket (24) and said bracket (12) on the same side of said jacket (24) relative to said first rolling element (40) to enhance relative movement between said jacket (24) and said bracket (12).

12. The steering column assembly of claim 11 wherein said first and third rolling elements (40, 70) are adjacent to one another.

13. The steering column assembly of claim 11 wherein said first and third rolling elements (40, 70) are back-to-back.

14. The steering column assembly of claim 11 wherein said first rolling element (40) enhances relative movement between said jacket (24) and said bracket (12) in a first direction and said third rolling element (70) enhances relative movement between said jacket (24) and said bracket (12) in a second direction transverse to the first direction.
